# EUROPEAN PATENT SPECIFICATION

(11) **EP 2 744 198 B1**
(45) Date of publication and mention of the grant of the patent: **15.03.2017**
(21) Application number: 12306599.7
(22) Date of filing: 17.12.2012
(51) Int. Cl.: H04N 7/18, H04W 4/02, G08B 13/196

(54) **Video surveillance system using mobile terminals**
Videoüberwachungssystem unter Verwendung mobiler Endgeräte
Système de surveillance vidéo utilisant des terminaux mobiles

(43) Date of publication of application: 18.06.2014
(73) Proprietor: ALCATEL LUCENT, 92100 Boulogne-Billancourt (FR)
(72) Inventor: Ansiaux, Arnaud, 91620 NOZAY (FR); Martin, Antony, 91620 NOZAY (FR)
(74) Representative: Mouney, Jérôme

(56) References cited:
- EP-A1- 2 280 382
- EP-A1- 2 302 602
- WO-A1-2009/024882
- WO-A2-2005/027486
- US-A1- 2003 227 540

## Description

### FIELD OF THE INVENTION

The present invention relates generally to the art of video surveillance system.

### BACKGROUND

Video surveillance camera systems are increasingly expanding since a few years, especially inside public authority places, but also inside critical companies, critical public infrastructures such as train stations, airports, subways, stores, gas stations... The global trend is to use more and more of these systems.

Moreover, new technologies, such as the Internet Protocol IP, have facilitated the deployment of such systems over already managed high speed networks. High Definition video quality of cameras has also done huge progress that is in favor of such video surveillance camera systems.

In this context, a first technical issue is the storage of information. Even though video compression is more and more efficient and storage capabilities are getting bigger, the storage of video information from a huge amount of video cameras is a real concern. This is even more challenging as some regulations, country and context dependant, require a legal amount of time for the storage.

A second technical issue is the real-time and post-mortem analysis of videos. Real-time analysis is a challenge as there are so many video sources, and a limited set of experts and analysts.

Post-mortem analysis is a challenge considering the amount of stored videos and the time constraints of analysis, i.e. an efficient video analysis will be efficient if done shortly after request, and efficiency will decrease if it takes hours or days to proceed.

Video analysis techniques, especially behavior analysis, have been extensively marketed along with the widespread of video surveillance camera systems. However these systems highly suffer from their too high false positive rate, which makes them operationally not usable yet. This is a high burden to deploy these automatic systems, especially considering the high sensitiveness of the assets in the surveillance. Human analysis is therefore still highly used.

Document EP 2 302 602 discloses a method for operating a video surveillance system comprising a set of cameras deployed on a series of surveillance zones. The prior art method is adapted to determine the location of a mobile terminal having established an emergency call and to send an incident message containing the coordinates of the incident to the video surveillance system that enables the selection of at least one camera corresponding to the coordinates of the incident.

So nowadays, existing video surveillance camera systems require lot of information technology resources such as storage and computing capacities. They also still highly rely on human expertise for the analysis of images and also for the overall management of the system.

There is a need to solve part of the two problems of storage and real-time processing and thus improve the overall effectiveness of surveillance systems deployed.

Accordingly, a new and/or improved system and/or method is disclosed which addresses the above-referenced desire(s) and/or others.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for operating a video surveillance system able to monitor a set of surveillance zones by a set of cameras, comprising the following steps in an application server in a telecommunication network able to communicate with the video surveillance system:
for each mobile terminal that has established an emergency call with an emergency call center and whose user is witness of an incident, retrieving localization data associated with the mobile terminal,
determining if the mobile terminal is located in a surveillance zone, using the retrieved localization data,
receiving a message sent from the mobile terminal, the message containing current localization data and a direction towards the incident,
if at least two mobile terminals are located in a same surveillance zone, computing coordinates of the incident, taking into account said current localization data and said directions provided by said at least two mobile terminals, and
sending an incident message containing the coordinates of the incident to the video surveillance system that is able to select at least one camera using the coordinates of the incident.

The invention advantageously provides the possibility to improve the storage capacity and the reactivity to a threat, and helps finding an emergency call terminal and not necessarily close to the incident and identifying and provide location of a threat (especially under stress in front of any incidents).

The invention develops new intelligent and reactive function for video surveillance system which is centrally administered through a SCADA system (Supervisory Control and Data Acquisition). The invention will effectively allow cameras which monitor a specific area to move and focus as quickly as possible to an incident spotted by people in the area.

In an embodiment, the application server determines if two mobile terminals are located in a same surveillance zone by performing a correlation between the current localization data of the two mobile terminals and coordinates of the surveillance zones.

In an embodiment, the application server determines if a mobile terminal is located in a surveillance zone, by performing a correlation between the retrieved localization data and coordinates of the surveillance zones.

In an embodiment, the application server computes the intersection of the two directions starting from coordinates corresponding to the current localization data of the two users to get coordinates of the incident.

In an embodiment, the received message further contains a timestamp, and the coordinates of the incident are computed if at least two mobile terminals are located in a same surveillance zone in a configured timeslot.

In an embodiment, the message sent from the mobile terminal is produced by an application implemented in the mobile terminal.

In an embodiment, after having determined if the mobile terminal is located in a surveillance zone, the application server sends a message to the mobile terminal, the message containing a link to a server hosting said application in order that the mobile terminal downloads the application.

In an embodiment, after having determined if the mobile terminal is located in a surveillance zone, and if the application is already implemented in the mobile terminal, the application server sends a message to the mobile terminal, the message containing an indication to select said application or a command to trigger said application.

In an embodiment, the application determines the direction towards the incident with the cooperation of the user.

In an embodiment, the application uses sensors and/or end-user inputs.

A further object of the invention is an application server in a telecommunication network for operating a video surveillance system able to monitor a set of surveillance zones by a set of cameras, the application server being able to communicate with the video surveillance system and comprising:
means for retrieving localization data, for each mobile terminal that has established an emergency call with an emergency call center and whose user is witness of an incident, associated with the mobile terminal,
means for determining if the mobile terminal is located in a surveillance zone, using the retrieved localization data,
means for receiving a message sent from the mobile terminal, the message containing current localization data and a direction towards the incident,
means for computing coordinates of the incident, taking into account said current localization data and said directions provided by at least two mobile terminals, if said at least two mobile terminals are located in a same surveillance zone,
means for sending an incident message containing the coordinates of the incident to the video surveillance system that is able to select at least one camera using the coordinates of the incident.

The invention relates further to a computer program adapted to be executed in a server for operating a video surveillance system using mobile terminals in a telecommunication network, said program including instructions which, when the program is executed in said server, execute the steps of the method of the invention.

### BRIEF DESCRIPTION OF THE FIGURE

Some embodiments of the present invention are now described, by way of example only, and with reference to the accompanying drawings, in which:
- FIG. 1 is a schematic block-diagram of a communication system including a video surveillance system according to an embodiment of the invention, and
- FIG. 2 is a flowchart showing steps performed to execute a method for operating a video surveillance system using mobile terminals in a telecommunication network according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

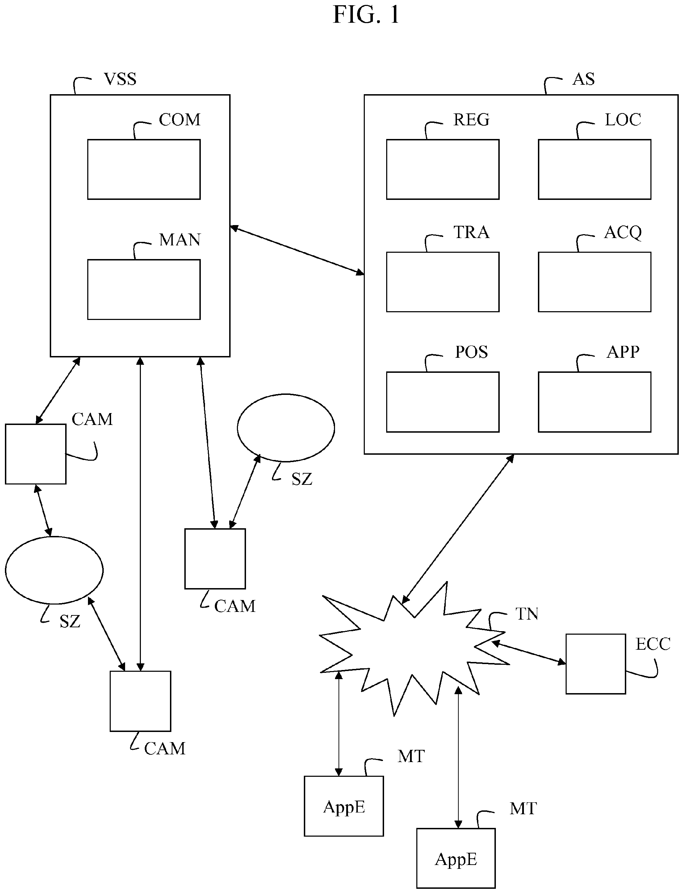

Referring to FIG. 1, a communication system comprises an application server AS and at least two mobile terminals MT, which are able to communicate between them through a telecommunication network TN. The communication system comprises also a video surveillance system VSS connected to a set of camera CAM and connected to the application server AS.

The telecommunication network TN is wireless network, eventually combined with other wired and wireless networks.

The mobile terminal MT can be a radio communication mobile terminal. For example, the mobile terminal MT is a mobile phone, or is a communicating Personal Digital Assistant PDA, or an intelligent telephone like SmartPhone.

In an example, the mobile terminal MT is a cellular mobile radio communication terminal, connected by a channel to a radio access network comprising the network of a fixed radio communication network, eg GSM (Global System for Mobile communications) or UMTS (Universal Mobile Telecommunications System) or LTE (Long Term Evolution), or any radio communication network with the 2G, 3G or 4G technology.

It is assumed that the mobile terminal is able to implement an application that gives to the end-user the possibility to provide a direction, for instance related to an event.

The video surveillance system VSS is managed by a video surveillance operator. The video surveillance system VSS can comprise several servers working in collaboration and can be a remote large-scale management system for processing in real-time a large number of telemetry and for controlling remotely technical installations, such as cameras. For example, the video surveillance system VSS is a SCADA (Supervisory Control And Data Acquisition) type system.

The video surveillance system VSS comprises a communication module COM and a management module MAN.

The communication module COM is an interface able to communicate with the telecommunication network TN and the application server AS.

The management module MAN is able to monitor and control a set of cameras CAM taking into account data received from the application server AS, said data comprising for example localization data and information on directions.

The set of cameras is dedicated to monitor a set of surveillance zones SZ. Each surveillance zone is monitored by a subset of cameras, the subset comprising one or more cameras.

Each camera is associated with a surveillance zone SZ and comprises an electronic assembly able to record images or videos from the surveillance zone SZ.

Optionally, the video surveillance system VSS can command parameters of the position of the camera, like a tilt angle, an azimuth angle or the elevation, in order to modify the filed of view of the camera.

Each surveillance zones SZ is associated with a set of coordinates CdZ defining geographically the surveillance zone. It is assumed that a surveillance zone SZ is larger than a zone monitored by the corresponding subset of cameras and is defined by the video surveillance system VSS in such a way that a person present in the surveillance zone can see an incident that has occurred in the monitored zone. Beyond the surveillance zone, it is assumed that the person cannot be witness of any incident occurred in said monitored zone.

The application server AS comprises a registration module REG, a transmission module TRA, a positioning module POS, a location module LOC, a data acquisition module ACQ, an application store module APP.

The application server AS is also connected to a service of the telecommunication network TN routing emergency call to an emergency call center ECC.

The registration module REG handles the registration of the video surveillance operator. It enables the storage inside the database of the required information including: the identity of the video surveillance operator, the different surveillance zones monitored by the cameras.

The transmission module TRA is an interface able to communicate with the communication module COM of the video surveillance system VSS.

The transmission module TRA and the communication module COM allow the application server AS and the video surveillance system VSS to securely exchange sensitive information, like the localization of the emergency event, with confidentiality and integrity by means of authentication for instance.

The positioning module POS computes the localization of the emergency event from the information received from the mobile terminals, for instance about a mobile terminal localization and a direction of an incident detected by the user of the mobile terminal.

The location module LOC checks if an emergency call is in a surveillance zone monitored by the video surveillance operator.

The data acquisition module ACQ allows the application server AS to get the localization and direction information from the mobile terminals that are calling the emergency services.

The application store module APP allows mobile terminals to download an application that gives the user the possibility to provide the direction of the emergency event.

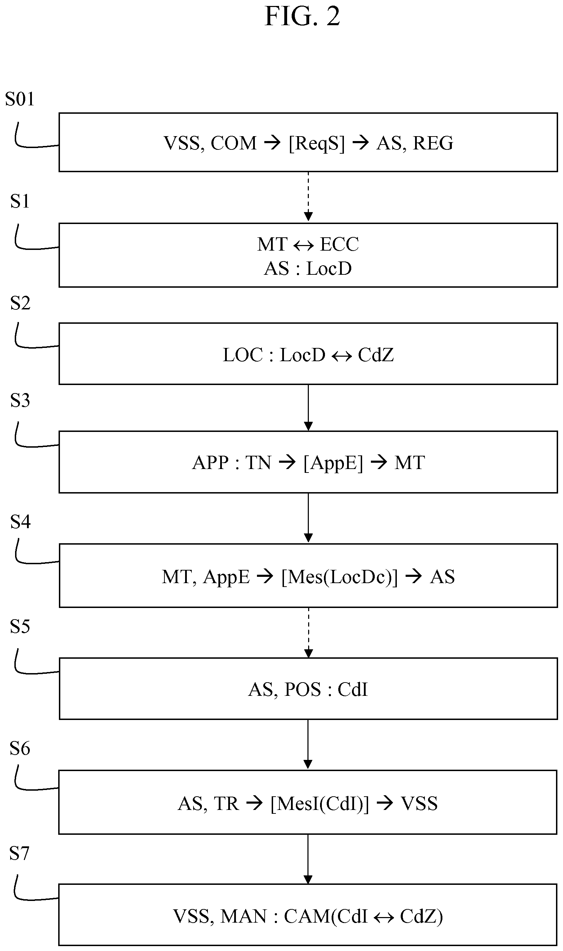

With reference to FIG. 2, a method for operating a video surveillance system using mobile terminals in a telecommunication network according to one embodiment of the invention comprises steps S1 to S7 executed automatically within the communication system.

At an initial step S01, the communication module SUB of the video surveillance system VSS sends a subscription request ReqS to the registration module REG of the application server AS included in the telecommunication network TN. The subscription request ReqS contains the localization of the surveillance zones.

Optionally, the application server AS checks if each surveillance zone is covered by the telecommunication network with a sufficient level of quality and sends a message to the video surveillance system VSS including these levels of quality.

The registration module REG stores the information related to the localization of the surveillance zones, said information allowing the mapping between a mobile terminal localization and a surveillance zone.

At step S1, a user of a mobile terminal MT is witness of an incident and establishes an emergency call toward the emergency call center ECC.

The emergency call is detected by the telecommunication network that triggers the application server AS, and in parallel the emergency call is routed toward the emergency call center ECC, allowing the user to describe the incident.

The data acquisition module ACQ retrieves localization data LocD associated with the mobile terminal MT, the localization data LocD being retrieved from a GPS like system incorporated in the mobile terminal, or determined via computation with triangularization or signal strength measurement.

At step S2, the location module LOC determines if the mobile terminal is located in a surveillance zone SZ, using the retrieved localization data LocD. For instance, the location module LOC performs a correlation between the localization data LocD and coordinates CdZ of the different surveillance zones SZ.

At step S3, if the mobile terminal is located in a surveillance zone SZ, the application store module APP determines the mobile terminal model, especially the operating system implemented in the mobile terminal. To this end, the application store module APP can retrieve for instance a profile associated to the call number of the mobile terminal.

The application store module APP invites the user of the mobile terminal to download an emergency application AppE, for example by sending a short message containing a link to a server hosting said emergency application for download.

The mobile terminal MT downloads the emergency application AppE from a dedicated server in the telecommunication network TN.

The emergency application AppE is capable of providing localization data and a direction. For example, the emergency application AppE can implement a compass feature. In another example, the emergency application AppE is able to use sensors of the mobile terminal MT, inviting the user to make a gesture in the direction of the incident. In another example, the emergency application AppE is able sends a map/3D map of the local zone that is displayed on the mobile terminal MT and the end-user points approximately the location of the incident and gives the altitude.

If the emergency application AppE is already implemented in the mobile terminal MT, the application store module APP sends a message to the mobile application MT, the short message containing an indication to select said emergency application or a command to trigger said application.

If the mobile terminal is not located in a surveillance zone SZ, the method stops as data provided by the mobile terminal cannot be used by the surveillance system.

At step S4, the user of the mobile terminal runs the emergency application AppE that determines the direction towards the incident with the cooperation of the user and gets current localization data LocDc.

The emergency application AppE produces and sends a message Mes to the positioning module POS of the application server AS, the message Mes containing current localization data LocDc and the direction towards the incident. Optionally, the message further comprises a timestamp.

Steps S1 to S4 are repeated each time an user of another mobile terminal is witness of an incident.

At step S5, the positioning module POS checks if at least two users are witnesses of the same incident, by correlating said current localization data LocDc retrieved from users having established emergency calls. Optionally, the positioning module POS checks if at least two users are witnesses of the same incident in a configured timeslot, by comparing the timestamp associated with each of the two users.

It is assumed two users are witnesses of the same incident when they are located in a same surveillance zone SZ, which is determined using the current localization data of the two users and coordinates CdZ of surveillance zones SZ.

When at least two users are witnesses of the same incident, the positioning module POS computes coordinates Cdl of the incident, taking into account localization data and directions provided by the two mobile terminals.

The positioning module POS can compute the intersection of the two directions starting from coordinates corresponding to the current localization data of the two users to get an approximate location of the incident.

The coordinates are continuously updated by leveraging new information retrieved from another mobile terminal.

At step S6, the transmission module TRA sends an incident message Mesl to the video surveillance system VSS, the incident message Mesl containing the coordinates Cdl.

At step S7, the management module MAN selects at least one camera CAM by correlating coordinates Cdl of the incident and coordinates CdZ of the different surveillance zones SZ. The management module MAN can then command selected cameras CAM to focus on the incident.

The steps of the method can be repeated when another mobile terminal is detected to be localized in the same surveillance zone SZ, in order to improve the accuracy of the coordinates Cdl of the incident.

Advantageously, the video surveillance operator can define the way the collected information will drive:
- quality of the video recorded;
- controls of the video like focus, zoom;
- amount of video cameras;
- screens priority and zoom.

The invention described here relates to a method and a server for operating a video surveillance system using mobile terminals in a telecommunication network. In an embodiment, the steps of the method of the invention are determined by the instructions of a computer program incorporated in a server such as the application server AS according to the invention. The program includes program instructions which, when said program is executed in a processor of the data processing device the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for operating a video surveillance system (VSS) able to monitor a set of surveillance zones (SZ) by a set of cameras (CAM), comprising the following steps in an application server (AS) in a telecommunication network (TN) able to communicate with the video surveillance system (VSS):
for each mobile terminal (MT) that has established an emergency call with an emergency call center (ECC) and whose user is witness of an incident, retrieving (S1) localization data (LocD) associated with the mobile terminal (MT),
determining (S2) if the mobile terminal is located in a surveillance zone (SZ), using the retrieved localization data (LocD),
receiving (S4) a message (Mes) sent from the mobile terminal, the message (Mes) containing current localization data (LocDc) of the mobile terminal and a direction from the mobile terminal towards the incident,
if at least two mobile terminals (MT) are located in a same surveillance zone (SZ), computing (S5) coordinates (Cdl) of the incident, taking into account said current localization data (LocDc) and said directions provided by said at least two mobile terminals, and
sending (S6) an incident message (Mesl) containing the coordinates (Cdl) of the incident to the video surveillance system (VSS) that is able to select at least one camera (CAM) using the coordinates (Cdl) of the incident.

2. A method according to claim 1, wherein the application server (AS) determines if two mobile terminals (MT) are located in a same surveillance zone (SZ) by performing a correlation between the current localization data (LocDc) of the two mobile terminals (MT) and coordinates (CdZ) of the surveillance zones (SZ).

3. A method according to claim 1 or 2, wherein the application server (AS) determines if a mobile terminal is located in a surveillance zone (SZ), by performing a correlation between the retrieved localization data (LocD) and coordinates (CdZ) of the surveillance zones (SZ).

4. A method according to any of claims 1 to 3, wherein the application server (AS) computes the intersection of the two directions starting from coordinates corresponding to the current localization data of the two users to get coordinates (Cdl) of the incident.

5. A method according to any of claims 1 to 4, wherein the received message (Mes) further contains a timestamp, and the coordinates (Cdl) of the incident are computed if at least two mobile terminals (MT) are located in a same surveillance zone (SZ) in a configured timeslot.

6. A method according to any of claims 1 to 5, wherein the message (Mes) sent from the mobile terminal is produced by an application (AppE) implemented in the mobile terminal (TM).

7. A method according to claim 6, wherein, after having determined if the mobile terminal is located in a surveillance zone (SZ), the application server (AS) sends a message to the mobile terminal, the message containing a link to a server hosting said application (AppE) in order that the mobile terminal (MT) downloads the application (AppE).

8. A method according to claim 6, wherein, after having determined if the mobile terminal is located in a surveillance zone (SZ), and if the application (AppE) is already implemented in the mobile terminal (MT), the application server (AS) sends a message to the mobile terminal, the message containing an indication to select said application or a command to trigger said application.

9. A method according to any of claims 6 to 8, wherein the application (AppE) determines the direction towards the incident with the cooperation of the user.

10. A method according to claim 8, wherein the application (AppE) uses sensors and/or end-user inputs.

11. An application server (AS) in a telecommunication network (TN) for operating a video surveillance system (VSS) able to monitor a set of surveillance zones (SZ) by a set of cameras (CAM), the application server (AS) being able to communicate with the video surveillance system (VSS) and comprising:
means (ACQ) for retrieving localization data (LocD), for each mobile terminal (MT) that has established an emergency call with an emergency call center (ECC) and whose user is witness of an incident, associated with the mobile terminal (MT),
means (LOC) for determining if the mobile terminal is located in a surveillance zone (SZ), using the retrieved localization data (LocD),
means (POS) for receiving a message (Mes) sent from the mobile terminal, the message (Mes) containing current localization data (LocDc) of the mobile terminal and a direction from the mobile terminal towards the incident,
means (POS) for computing coordinates (Cdl) of the incident, taking into account said current localization data (LocDc) and said directions provided by at least two mobile terminals, if said at least two mobile terminals (MT) are located in a same surveillance zone (SZ),
means (TRA) for sending an incident message (Mesl) containing the coordinates (Cdl) of the incident to the video surveillance system (VSS) that is able to select at least one camera (CAM) using the coordinates (Cdl) of the incident.

12. A computer program adapted to be executed in an application server (AS) in a telecommunication network (TN) for operating a video surveillance system (VSS) able to monitor a set of surveillance zones (SZ) by a set of cameras (CAM), the application server (AS) being able to communicate with the video surveillance system (VSS), said program including instructions which, when said program is executed in said presence server, execute the following steps :
for each mobile terminal (MT) that has established an emergency call with an emergency call center (ECC) and whose user is witness of an incident, retrieving (S1) localization data (LocD) associated with the mobile terminal (MT),
determining (S2) if the mobile terminal is located in a surveillance zone (SZ), using the retrieved localization data (LocD),
receiving (S4) a message (Mes) sent from the mobile terminal, the message (Mes) containing current localization data (LocDc) of the mobile terminal and a direction from the mobile terminal towards the incident,
if at least two mobile terminals (MT) are located in a same surveillance zone (SZ), computing (S5) coordinates (Cdl) of the incident, taking into account said current localization data (LocDc) and said directions provided by said at least two mobile terminals,
sending (S6) an incident message (Mesl) containing the coordinates (Cdl) of the incident to the video surveillance system (VSS) that is able to select at least one camera (CAM) using the coordinates (Cdl) of the incident.

## Patentansprüche

1. Verfahren für den Betrieb eines Videoüberwachungssystems (Video Surveillance System, VSS), ausgelegt für das Überwachen einer Reihe von Überwachungszonen (Surveillance Zones, SZ) anhand eines Satzes von Kameras (CAM), die folgenden Schritte in einem Anwendungsserver (AS) in einem Telekommunikationsnetzwerk (TN) umfassend, welches dafür ausgelegt ist, mit dem Videoüberwachungssystem (VSS) zu kommunizieren:
für jedes mobile Endgerät (Mobile Terminal, MT), das einen Notruf an eine Notrufzentrale (Emergency Call Center, ECC) gesendet hat und dessen Benutzer Zeuge eines Vorfalls ist, das Abrufen (S1) der mit dem mobilen Endgerät (MT) assoziierten Lokalisierungsdaten (LocD),
das Bestimmen (S2), ob sich das mobile Endgerät in einer Überwachungszone (SZ) befindet, was anhand der abgerufenen Lokalisierungsdaten (LocD) erfolgt,
den Empfang (S4) einer von dem mobilen Endgerät gesendeten Nachricht (Message, Mes), welche die aktuellen Lokalisierungsdaten (LocD) des mobilen Endgeräts und einen Richtungshinweis des mobilen Endgeräts hinsichtlich des Vorfalls enthält,
wenn mindestens zwei mobile Endgeräte (MT) in derselben Überwachungszone (SZ) lokalisiert werden, das Berechnen (S5) von Koordinaten (Cdl) des Vorfalls, wobei die besagten, aktuellen Lokalisierungsdaten (LocD) und besagte Richtungshinweise berücksichtigt werden, die von den beiden, mindestens zwei mobilen Endgeräten zur Verfügung gestellt wurden, und
das Senden (S6) einer die Koordinaten (Cdl) enthaltenden Vorfallsmeldung (Mesl) des Vorfalls an das Videoüberwachungssystem (VSS), das dafür ausgelegt ist, anhand der Koordinaten (Cdl) des Vorfalls mindestens eine Kamera (CAM) auszuwählen.

2. Verfahren nach Anspruch 1, wobei der Anwendungsservers (AS) bestimmt, ob sich zwei mobile Endgeräte (MT) in derselben Überwachungszone (SZ) befinden, indem er eine Korrelation zwischen den aktuellen Lokalisierungsdaten (LocDc) der zwei mobilen Endgeräte (MT) und Koordinaten (CdZ) der Überwachungszonen (SZ) herstellt.

3. Verfahren nach Anspruch 1 oder 2, wobei der Anwendungsservers (AS) bestimmt, ob sich ein mobiles Endgerät in einer Überwachungszone (SZ) befindet, indem er eine Korrelation zwischen den aktuellen Lokalisierungsdaten (LocD) und Koordinaten (CdZ) der Überwachungszonen (SZ) herstellt.

4. Verfahren nach einem jeglichen der Ansprüche 1 bis 3, wobei der Anwendungsserver (AS) den Schnittpunkt der beiden Richtungsangaben berechnet, ausgehend von den Koordinaten, die den aktuellen Lokalisierungsdaten der beiden Benutzer entsprechen, um die Koordinaten (Cdl) des Vorfalls zu erhalten.

5. Verfahren nach einem jeglichen der Ansprüche 1 bis 4, wobei die empfangene Nachricht (Mes) weiterhin einen Zeitstempel umfasst und die Koordinaten (Cdl) des Vorfalls berechnet werden, wenn sich im Verlauf eines konfigurierten Zeitschlitzes mindestens zwei mobile Endgeräte in einer selben Überwachungszone (SZ) befinden.

6. Verfahren nach einem jeglichen der Ansprüche 1 bis 5, wobei die vom mobilen Endgerät gesendete Nachricht (Mes) von einer Anwendung (AppE) produziert wird, die in dem mobilen Endgerät (MT) implementiert ist.

7. Verfahren nach Anspruch 6, wobei nach erfolgtem Bestimmen, ob sich das mobile Endgerät in der Überwachungszone (SZ) befindet, der Anwendungsserver (AS) eine Nachricht an das mobile Endgerät sendet, wobei die Nachricht einen Link zu einem Server umfasst, der besagte Anwendung (AppE) hostet, damit das mobilen Endgerät (MT) die Anwendung (AppE) herunterlädt.

8. Verfahren nach Anspruch 6, wobei der Anwendungsserver (AS) nach dem Bestimmen, ob sich ein mobiles Endgerät in einer Überwachungszone (SZ) befindet, und dann, wenn die Anwendung (AppE) bereits in dem mobilen Endgerät (MT) implementiert ist, eine Nachricht an das mobile Endgerät sendet, wobei die Nachricht eine Indikation zur Auswahl besagter Anwendung oder einen Befehl zum Auslösen besagter Anwendung umfasst.

9. Verfahren nach einem jeglichen der Ansprüche 6 bis 8, wobei die Anwendung (AppE) unter Mithilfe des Benutzers die Richtung bestimmt, in welcher der Vorfall liegt.

10. Verfahren nach Anspruch 8, wobei die Anwendung (AppE) Sensoren und/oder Eingaben des Endbenutzers verwendet.

11. Anwendungsserver (AS) in einem Telekommunikationsnetzwerk (TN) für den Betrieb eines Videoüberwachungssystems (Video Surveillance System, VSS), ausgelegt für das Überwachen einer Reihe von Überwachungszonen (Surveillance Zones, SZ) anhand eines Satzes von Kameras (CAM), wobei der Anwendungsserver (AS) dafür ausgelegt ist, mit dem Videoüberwachungssystem (VSS) zu kommunizieren, und wobei der Anwendungsserver (AS) umfasst:
Mittel (ACQ) für das Abrufen von Lokalisierungsdaten (LocD) für jedes mobile Endgerät (MT), das einen Notruf an eine Notrufzentrale (ECC) gesendet hat und dessen Benutzer Zeuge eines Vorfalls ist, wobei die Lokalisierungsdaten mit dem mobilen Endgerät (MT) assoziiert sind,
Mittel (LOC) für das Bestimmen, ob sich das mobile Endgerät in einer Überwachungszone (SZ) befindet, was anhand der abgerufenen Lokalisierungsdaten (LocD) erfolgt,
Mittel (POS) für den Empfang einer von dem mobilen Endgerät gesendeten Nachricht (Mes), welche die aktuellen Lokalisierungsdaten (LocD) des mobilen Endgeräts und einen Richtungshinweis des mobilen Endgeräts hinsichtlich des Vorfalls enthält,
Mittel (POS) für das Berechnen von Koordinaten (Cdl) des Vorfalls, besagte aktuelle Lokalisierungsdaten (LocDc) und besagte Richtungsangaben berücksichtigend, die von den besagten, mindestens zwei mobilen Endgeräten zur Verfügung gestellt wurden, wenn die besagten, mindestens zwei mobilen Endgeräte (MT) sich in einer selben Überwachungszone (SZ) befinden,
Mittel (TRA) für das Senden einer die Koordinaten (CDI) enthaltenden Vorfallsmeldung (Mesl) des Vorfalls an das Videoüberwachungssystem (VSS), das dafür ausgelegt ist, anhand der Koordinaten (Cdl) des Vorfalls mindestens eine Kamera (CAM) auszuwählen.

12. Computerprogramm, das dafür ausgelegt ist, um in einem Anwendungsserver (AS) in einem Telekommunikationsnetzwerk (TN) ausgeführt zu werden, und das dem Betrieb eines Videoüberwachungssystems (VSS) dient, das dafür ausgelegt ist, anhand von einem Satz von Kameras (CAM) eine Reihe von Überwachungszonen (SZ) zu überwachen, wobei der Anwendungsserver (AS) dafür ausgelegt ist, um mit dem Videoüberwachungssystem (VSS) zu kommunizieren, wobei besagtes Programm Anweisungen umfasst, die dann, wenn besagtes Programm in besagtem Präsenzserver ausgeführt wird, die folgenden Schritte ausführen:
für jedes mobile Endgerät (Mobile Terminal, MT), das einen Notruf an eine Notrufzentrale (Emergency Call Center, ECC) gesendet hat und dessen Benutzer Zeuge eines Vorfalls ist, das Abrufen (S1) der mit dem mobilen Endgerät (MT) assoziierten Lokalisierungsdaten (LocD),
das Bestimmen (S2), ob sich das mobile Endgerät in einer Überwachungszone (SZ) befindet, was anhand der abgerufenen Lokalisierungsdaten (LocD) erfolgt,
den Empfang (S4) einer von dem mobilen Endgerät gesendeten Nachricht (Message, Mes), welche die aktuellen Lokalisierungsdaten (LocD) des mobilen Endgeräts und einen Richtungshinweis des mobilen Endgeräts hinsichtlich des Vorfalls enthält,
wenn mindestens zwei mobile Endgeräte (MT) in derselben Überwachungszone (SZ) lokalisiert werden, das Berechnen (S5) von Koordinaten (Cdl) des Vorfalls, wobei die besagten, aktuellen Lokalisierungsdaten (LocD) und besagte Richtungshinweise berücksichtigt werden, die von den beiden, mindestens zwei mobilen Endgeräten zur Verfügung gestellt wurden,
das Senden (S6) einer die Koordinaten (CDI) enthaltenden Vorfallsmeldung (Mesl) des Vorfalls an das Videoüberwachungssystem (VSS), das dafür ausgelegt ist, anhand der Koordinaten (Cdl) des Vorfalls mindestens eine Kamera (CAM) auszuwählen.

## Revendications

1. Procédé d'exploitation d'un système de vidéosurveillance (VSS) capable de surveiller un ensemble de zones de surveillance (SZ) à l'aide d'un ensemble de caméras (CAM), comprenant les étapes suivantes dans un serveur d'application (AS) situé au sein d'un réseau de télécommunications (TN) pouvant communiquer avec le système de vidéosurveillance (VSS) :
pour chaque terminal mobile (MT) qui a établi un appel d'urgence avec un centre d'appel d'urgence (ECC) et dont l'utilisateur est témoin d'un incident, récupérer (S1) les données de localisation (LocD) associées au terminal mobile (MT),
déterminer (S2) si le terminal mobile se situe dans une zone de surveillance (SZ), à l'aide des données de localisation récupérées (LocD),
recevoir (S4) un message (Mes) envoyé depuis le terminal mobile, le message (Mes) contenant les données de localisation courante (LocDc) du terminal mobile et la direction de l'incident à partir du terminal mobile,
si au moins deux terminaux mobiles (MT) se situent dans une même zone de surveillance (SZ), calculer (S5) les coordonnées (Cdl) de l'incident, en prenant en compte lesdites données de localisation courante (LocDc) et lesdites directions fournies par lesdits au moins deux terminaux mobiles, et
envoyer (S6) un message d'incident (Mesl) contenant les coordonnées (Cdl) de l'incident au système de vidéosurveillance (VSS) qui est capable de sélectionner au moins une caméra (CAM) à l'aide des coordonnées (Cdl) de l'incident.

2. Procédé selon la revendication 1, dans lequel le serveur d'application (AS) détermine si deux terminaux mobiles (MT) se situent dans une même zone de surveillance (SZ) en effectuant une corrélation entre les données de localisation courante (LocDc) des deux terminaux mobiles (MT) et les coordonnées (CdZ) de la zone de surveillance (SZ).

3. Procédé selon la revendication 1 ou 2, dans lequel le serveur d'application (AS) détermine si un terminal mobile se situe dans une zone de surveillance (SZ), en effectuant une corrélation entre les données de localisation récupérées (LocD) et les coordonnées (CdZ) de la zone de surveillance (SZ).

4. Procédé selon l'une quelconque des revendications 1 à 3, dans lequel le serveur d'application (AS) calcule l'intersection des deux directions en partant des coordonnées correspondant aux données de localisation courante des deux utilisateurs pour obtenir les coordonnées (Cdl) de l'incident.

5. Procédé selon l'une quelconque des revendications 1 à 4, dans lequel le message reçu (Mes) contient en outre un horodatage, et les coordonnées (Cdl) de l'incident sont calculées si au moins deux terminaux mobiles (MT) se situent dans une même zone de surveillance (SZ) dans un intervalle de temps configuré.

6. Procédé selon l'une quelconque des revendications 1 à 5, dans lequel le message (Mes) envoyé depuis le terminal mobile est produit par une application (AppE) implémentée dans le terminal mobile (MT).

7. Procédé selon la revendication 6, dans lequel, après avoir déterminé si le terminal mobile se situe dans une zone de surveillance (SZ), le serveur d'application (AS) envoie un message au terminal mobile, le message contenant un lien vers un serveur hébergeant ladite application (AppE) afin que le terminal mobile (MT) télécharge l'application (AppE).

8. Procédé selon la revendication 6, dans lequel, après avoir déterminé si le terminal mobile se situe dans une zone de surveillance (SZ), et si l'application (AppE) est déjà implémentée dans le terminal mobile (MT), le serveur d'application (AS) envoie un message au terminal mobile, le message contenant une indication pour sélectionner ladite application ou une commande pour lancer ladite application.

9. Procédé selon l'une quelconque des revendications 6 à 8, dans lequel l'application (AppE) détermine la direction de l'incident avec la coopération de l'utilisateur.

10. Procédé selon la revendication 8, dans lequel l'application (AppE) utilise des capteurs et/ou des entrées de l'utilisateur.

11. Serveur d'application (AS) situé au sein d'un réseau de télécommunications (TN) destiné à exploiter un système de vidéosurveillance (VSS) capable de surveiller un ensemble de zones de surveillance (SZ) à l'aide d'un ensemble de caméras (CAM), le serveur d'application (AS) pouvant communiquer avec le système de vidéosurveillance (VSS) et comprenant :
des moyens (ACQ) pour récupérer des données de localisation (LocD), pour chaque terminal mobile (MT) qui a établi un appel d'urgence avec un centre d'appel d'urgence (ECC) et dont l'utilisateur est témoin d'un incident, associées au terminal mobile (MT),
des moyens (LOC) pour déterminer si le terminal mobile se situe dans une zone de surveillance (SZ), à l'aide des données de localisation récupérées (LocD),
des moyens (POS) pour recevoir un message (Mes) envoyé depuis le terminal mobile, le message (Mes) contenant les données de localisation courante (LocDc) du terminal mobile et la direction de l'incident à partir du terminal mobile,
des moyens (POS) pour calculer les coordonnées (Cdl) de l'incident, en prenant en compte lesdites données de localisation courante (LocDc) et lesdites directions fournies par au moins deux terminaux mobiles, si lesdits au moins deux terminaux mobiles (MT) se situent dans une même zone de surveillance (SZ),
des moyens (TRA) pour envoyer un message d'incident (Mesl) contenant les coordonnées (Cdl) de l'incident au système de vidéosurveillance (VSS) qui est capable de sélectionner au moins une caméra (CAM) à l'aide des coordonnées (Cdl) de l'incident.

12. Programme informatique adapté pour être exécuté dans un serveur d'application (AS) situé au sein d'un réseau de télécommunications (TN) destiné à exploiter un système de vidéosurveillance (VSS) capable de surveiller un ensemble de zones de surveillance (SZ) à l'aide d'un ensemble de caméras (CAM), le serveur d'application (AS) pouvant communiquer avec le système de vidéosurveillance (VSS), ledit programme contenant des instructions qui, lorsque ledit programme est exécuté dans ledit serveur de présence, réalisent les étapes suivantes :
pour chaque terminal mobile (MT) qui a établi un appel d'urgence avec un centre d'appel d'urgence (ECC) et dont l'utilisateur est témoin d'un incident, récupérer (S1) les données de localisation (LocD) associées au terminal mobile (MT),
déterminer (S2) si le terminal mobile se situe dans une zone de surveillance (SZ), à l'aide des données de localisation récupérées (LocD),
recevoir (S4) un message (Mes) envoyé depuis le terminal mobile, le message (Mes) contenant les données de localisation courante (LocDc) du terminal mobile et la direction de l'incident à partir du terminal mobile,
si au moins deux terminaux mobiles (MT) se situent dans une même zone de surveillance (SZ), calculer (S5) les coordonnées (Cdl) de l'incident, en prenant en compte lesdites données de localisation courante (LocDc) et lesdites directions fournies par lesdits au moins deux terminaux mobiles,
envoyer (S6) un message d'incident (Mesl) contenant les coordonnées (Cdl) de l'incident au système de vidéosurveillance (VSS) qui est capable de sélectionner au moins une caméra (CAM) à l'aide des coordonnées (Cdl) de l'incident.
